(19) Europäisches Patentamt
European Patent Office
Office européen des brevets

(11) Veröffentlichungsnummer : **0 158 163**
**B1**

(12) # EUROPÄISCHE PATENTSCHRIFT

(45) Veröffentlichungstag der Patentschrift : **01.02.89**

(51) Int. Cl.$^4$ : **C 07 F 7/00**

(21) Anmeldenummer : **85103080.9**

(22) Anmeldetag : **16.03.85**

(54) **Herstellung von Organozinn-halogeniden durch katalysierte Redistribution von höher alkylierten Organozinn-Verbindungen mit niedriger alkylierten.**

(30) Priorität : **30.03.84 DE 3411834**

(43) Veröffentlichungstag der Anmeldung : **16.10.85 Patentblatt 85/42**

(45) Bekanntmachung des Hinweises auf die Patenterteilung : **01.02.89 Patentblatt 89/05**

(84) Benannte Vertragsstaaten : **BE CH DE FR GB IT LI NL SE**

(56) Entgegenhaltungen :
**GB-A- 1 232 691**
**US-A- 3 414 595**
**Taschenbuch der Kunststoffadditive, ISBN 3-4446-13689-4, Seiten 210-216**

(73) Patentinhaber : **SCHERING AKTIENGESELLSCHAFT**
**Berlin und Bergkamen**
**Waldstrasse 14 Postfach 15 40**
**D-4709 Bergkamen (DE)**

(72) Erfinder : **Buschhoff, Max, Dr. Dipl.-Chem.**
**Auf dem Weidkamp 28**
**D-4670 Lünen (DE)**
Erfinder : **Neumann, Wilhelm Paul, Prof. Dr.**
**Tiroler Strasse 18**
**D-4600 Dortmund-Kirchhörde (DE)**

**EP 0 158 163 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Organozinn-halogeniden der allgemeinen Formel $R_3SnX$, $R_2SnX_2$ oder $RSnX_3$ durch Redistribution zweckmäßiger Gemische aus Organozinnverbindungen der Art $R_4Sn$, $R_3SnX$ oder $R_2SnX_2$ und Zinnhalogen-Verbindungen der Art $R_2SnX_2$, $RSnX_3$ oder $SnX_4$. Hierbei ist R ein Alkylrest mit 1-16 C-Atomen, ein Cycloalkylrest, ein Aryl- oder Aralkylrest, und X eines der Halogene Cl, Br, I. Zahlreiche derartige Umsetzungen sind an sich bekannt, einige haben vorzugsweise mit R = Butyl, Isobutyl, Octyl oder Phenyl und X = Chlor erhebliche technische Bedeutung. Häufig handelt es sich um komplexe Reaktionen mit mehreren Teilschritten. Zum Beispiel sind die Teilschritte 1 und 2 Bestandteile der großtechnisch ausgeführten Reaktion 3 :

1) $R_4Sn + SnCl_4 \longrightarrow R_3SnCl + RSnCl_3$
2) $R_3SnCl + RSnCl_3 \longrightarrow 2\ R_2SnCl_2$
3) $R_4Sn + SnCl_4 \longrightarrow 2\ R_2SnCl_2$

Während nun die Umsetzung 1 bei Raumtemperatur rasch und exotherm verläuft, ist dies bei Umsetzung 2 nicht der Fall. Sie verläuft vielmehr sehr langsam, so daß langes Erhitzen auf hohe Temperaturen nötig ist, z. B. mit R = Butyl 7 Std auf 220 °C. Eine Senkung von Zeit und Temperatur würde die Wirtschaftlichkeit durch erhebliche Energieeinsparung erhöhen und wäre somit als beträchtlicher technischer Fortschritt sehr wünschenswert.

Gleiches gilt für die folgenden Umsetzungen :

4) $R_4Sn + 2\ RSnCl_3 \longrightarrow 3\ R_2SnCl_2$
5) $2\ R_4Sn + RSnCl_3 \longrightarrow 3\ R_3SnCl$
6) $R_4Sn + R_2SnCl_2 \longrightarrow 2\ R_3SnCl$
7) $2\ R_3SnCl + SnCl_4 \longrightarrow 3\ R_2SnCl_2$

Auch in den Redistributionen 4) und 7) muß der langsame Teilschritt 2) durchlaufen werden. Alle diese Umsetzungen haben mögliche oder tatsächliche technische Bedeutung, je nach den verfügbaren Ausgangsmaterialien. Das Gesagte gilt auch für die übrigen, oben erwähnten Halogene.

Eine besondere Rolle spielen die Verfahren zur Darstellung von Verbindungen $RSnX_3$, da hier einzelne Teilschritte durch bloßes Erhitzen nur äußerst langsam oder gar nicht ablaufen. So kommt es, daß z. B. die Umsetzung 8 nur mit Aryl- oder Vinylverbindungen durchgeführt werden kann, nicht aber mit den technisch weit wichtigeren Alkyl- oder Cycloalkylverbindungen :

8) $R_4Sn + 3\ SnCl_4 \longrightarrow 4\ RSnCl_3$

Ursache ist, daß der Teilschritt 9 in diesen Fällen nicht abläuft :

9) $R_2SnCl_2 + SnCl_4 \longrightarrow 2\ RSnCl_3$

Ein Abweichen von der genauen Stöchiometrie in den oben angegebenen Gleichungen kann in beabsichtigter Weise zu Gemischen von Organozinn-halogeniden führen, z. B. $R_3SnX + R_2SnX_2$ oder $R_2SnX_2 + RSnX_3$. So sind z. B. Gemische der letzteren Art technisch wichtig zur weiteren Verarbeitung als Stabilisatoren für Kunststoffe.

Wegen der vorhersehbaren technischen Bedeutung fehlte es nicht an Bemühungen, Umsetzung 8 zu erreichen, z. B. durch Einsatz großer Mengen an Phosphoroxychlorid oder Phosphorpentachlorid, s. DE-C-1 177 158.

Wegen der komplizierten Verfahrensweise und des hohen Preises der Hilfsstoffe hat dieses Verfahren jedoch keinerlei technische Bedeutung erlangt.

Die sehr unbefriedigende Lage führte zu zahlreichen Bemühungen, langsam oder gar nicht ablaufende Redistributionsreaktionen durch Einsatz von Katalysatoren befriedigend zu gestalten. Jedoch haben alle bisherigen Vorschläge erhebliche prinzipielle oder technische Nachteile. So wird z. B. in US-A-3 297 732 zu diesem Zweck der Einsatz einer Gruppe von Metallhalogeniden als Katalysatoren empfohlen, wobei Aluminiumtrichlorid bevorzugt ist. Jedoch ist bekannt, daß $AlCl_3$ durch Organozinnverbindungen alkyliert werden kann, was einen Verlust von Alkylgruppen zur Folge hat. Außerdem entsteht ein schwarzes und schwer zu reinigendes Reaktionsprodukt. Die erforderlichen Reinigungsoperationen führen zu Substanzverlusten. Die beschriebene Umkristallisation aus Hexan zur Reinigung ist überdies umständlich und hebt etwaige Vorteile weitgehend auf, zudem man immer noch nicht sicher sein kann, daß im Produkt nicht doch noch Aluminiumverbindungen enthalten sind, die bei der späteren Verwendung stören.

Um diese Mängel zu beheben, werden in DE-B-19 62 301 gleiche bzw. ähnliche Katalysatoren empfohlen, wobei aber versucht wird, die Schwierigkeiten zu vermeiden, indem in einer zusätzlichen, ebenfalls aufwendigen Stufe mit Wasser hydrolysiert wird und so die Umsetzungprodukte des Katalysators abgetrennt werden. Das Verfahren ist zweifelhaft, da restliches Monobutyl-zinntrichlorid vollständig in Wasser löslich ist und das in kleinen Mengen vorhandene Tributyl-zinnchlorid zusätzlich Abwasserprobleme verursacht. In jedem Fall tritt ein Substanzverlust ein.

Überdies sind die im Stand der Technik genannten Katalysatoren in der Regel nur zum einmaligen Gebrauch geeignet und werden nach Aufarbeitung verworfen, was wiederum Entsorgungsprobleme und zusätzliche Kosten bedingt.

Es wurde nun gefunden, daß Zinn(II)-fluorid geeignet ist, die oben genannten langsamen Teilstufen in besonders vorteilhafter Weise erheblich zu beschleunigen, und daß es eine verbesserte Wirksamkeit gegenüber bisher bekannten Katalysatoren aufweist.

Gegenstand der Erfindung ist daher ein Verfahren zur Herstellung von Organozinn-halogeniden durch Redistribution zweckmäßiger Gemische aus Organozinnverbindungen der Art $R_4Sn$, $R_3SnX$ oder $R_2SnX_2$ und Zinnhalogen-Verbindungen der Art $R_2SnX_2$, $RSnX_3$ oder $SnX_4$, das dadurch gekennzeichnet ist, daß man als Katalysator Zinn(II)-fluorid einsetzt ; dabei wird vorzugsweise die Umsetzung oberhalb von etwa 210 °C in homogener Phase durchgeführt, wobei der Katalysator vorteilhaft in Mengen von etwa 0,01 bis 1 Mol-%, bezogen auf die Anzahl der Mole der Edukte, zugesetzt wird.

Eine weitere Ausgestaltung des erfindungsgemäßen Verfahrens ist dadurch gekennzeichnet, daß man die Umsetzung bei Temperaturen von etwa 140 °C bis 200 °C in nichthomogener Phase durchführt. Dabei setzt man den Katalysator in Mengen von etwa 5 bis 50 Mol-%, bezogen auf die Anzahl der Mole der Edukte, ein.

Eine weitere Ausbildungsform des Verfahrens ist dadurch gekennzeichnet, daß das Reaktionsgemisch kontinuierlich über den Katalysator geleitet wird.

Das erfindungsgemäß Verfahren eignet sich für die Herstellung von Organozinnhalogeniden der allgemeinen Formel $R_3SnX$, $R_2SnX_2$ oder $RSnX_3$, durch Redistribution zweckmäßiger Gemische aus Organozinnverbindungen der Art $R_4Sn$, $R_3SnX$ oder $R_2SnX_2$ und Zinnhalogen-Verbindungen der Art $R_2SnX_2$, $RSnX_3$ oder $SnX_4$. Dabei kann R ein Alkylrest mit 1-16 C-Atomen sein, wobei insbesondere Methyl, Ethyl, n-Butyl-, n-Octyl und n-Dodecyl bevorzugt und von besonderem Interesse sind. Als Beispiele für verzweigte Alkylreste seien genannt i-Butyl, 2-Ethyl-hexyl, als cyclische Alkylreste kommt insbesondere Cyclohexyl infrage ; ferner steht R für Aryl, insbesondere den Phenyl- und Naphthylrest, sowie für Aralkyl, wie z. B. Tolyl, Neophyl.

X ist eines der Halogene J, Br und Cl, wobei letzteres bevorzugt ist.

Als Beispiele für die einzusetzenden Organozinnverbindungen des Typs $R_2SnX_2$, $RSnX_3$ und $SnX_4$ seien genannt (cHx = Cyclohexyl-) :

$n\text{-}C_4H_9SnCl_3$, $SnCl_4$, $i\text{-}C_3H_7SnCl_3$, $i\text{-}C_4H_9SnCl_3$,
$n\text{-}C_3H_7SnCl_3$, $n\text{-}C_8H_{17}SnCl_3$, $(i\text{-}C_4H_9)_2SnCl_2$,
$n\text{-}C_5H_{11}SnCl_3$, $(n\text{-}C_8H_{12})_2SnCl_2$, $(n\text{-}C_3H_7)_2SnCl_2$,
$(n\text{-}C_4H_9)_2SnCl_2$, $SnBr_4$, $(C_{12}H_{25})_2SnCl_2$, $cHxSnCl_3$
(cHx = Cyclohexyl), $(nC_4H_9)_2SnBr_2$, $C_6H_5SnCl_3$,
$C_6H_5CH_2SnCl_3$, Neophyl $SnJ_3$, $cHxSnBr_3$, $cHxSnJ_3$.

Als Beispiele für die Zinnverbindungen des Typs $R^4Sn$, $R_3SnX$ und $R_2SnX_2$ seien genannt :

$(n\text{-}C_3H_7)_2SnCl_2$, $(CHx)_2SnCl_2$, $(n\text{-}C_{12}H_{25})_3SnCl$,
$(i\text{-}C_4H_9)_2SnCl_2$, $(C_6H_5CH_2)_2SnCl_2$, $(n\text{-}C_{12}H_{25})_4Sn$,
$(C_6H_5)_2SnCl_2$, $(i\text{-}C_3H_7)_2SnCl_2$, $(n\text{-}C_8H_{17})_3SnCl$,
$(n\text{-}C_8H_{17})_4Sn$, $(n\text{-}C_4H_9)_3SnCl$, $(n\text{-}C_4H_9)_2SnBr_2$,
$(C_6H_5)_3SnCl$, $(i\text{-}C_4H_9)_3SnCl$, $(CHx)_3SnCl$,
$(n\text{-}C_4H_9)_3SnBr$, $(C_6H_5)_4Sn$, $(n\text{-}C_4H_9)_4Sn$,
$(C_6H_5CH_2)_3SnCl$.

Die vorteilhafte Wirkung des erfindungsgemäß eingesetzten Katalysators sei beispielhaft zahlenmäßig belegt für die Umsetzung 2 in nichthomogener Phase, die an sich langsam verläuft, mit den angegebenen Katalysatoren (20 Mol-%) ohne Lösungsmittel jedoch die folgenden Daten erreicht (R = n-Butyl) :

| | |
|---|---|
| ohne Katalysator | 140°, 50 h, 75 % Umsetzung |
| mit $SnF_2$ | 140°, 4 h, 97 % Umsetzung. |

Gegenüber den im Stand der Technik angegebenen Metallchloriden zeigt das erfindungsgemäß eingesetzte $SnF_2$ ebenfalls eine deutlich gesteigerte Umsetzungsgeschwindigkeit, wie die folgenden Werte zeigen.

Umsetzung 2, R = n-Butyl, 20 Mol-% Katalysator

| | | | | |
|---|---|---|---|---|
| Sn $Cl_2$ | 140 °C, | 24 h, | 81 % | Umsetzung |
| Hg $Cl_2$ | 140 °C, | 6 h, | 75 % | Umsetzung |
| Pb $Cl_2$ | 140 °C, | 24 h, | 80 % | Umsetzung |
| Pb $F_2$ | 140 °C, | 4 h, | 74 % | Umsetzung. |

Wie die ebenfalls zum Vergleich angegebenen Werte für $PbF_2$ zeigen, bewirkt diese Verbindung eine schnellere Umsetzung gegenüber den Metallchloriden ; es kann jedoch die hervorragenden Werte des $SnF_2$ nicht erreichen, dessen vorteilhafte Eigenschaften weiterhin durch die folgenden Werte belegt seien :

Umsetzung 4, R = n-Butyl (15 % Katalysator) :

| | |
|---|---|
| ohne Katalysator | 140°, 24 h, 74 % Umsetzung |
| $SnCl_2$ | 140°, 24 h, 97 % Umsetzung |
| $SnF_2$ | 140°, 4 h, 97 % Umsetzung. |

Gleiches läßt sich für die Umsetzung 5 belegen, was beispielhaft für R = n-Butyl angegeben sei :

| | |
|---|---|
| Ohne Katalysator | 140°, 7 h, 40 % Umsetzung |
| $SnCl_2$ | 140°, 7 h, 90 % Umsetzung |
| $SnF_2$ | 140 °C, 2 h, 97 % Umsetzung. |

Auch der Einzelschritt gemäß Gleichung 6 wird ganz erheblich beschleunigt (R = n-Butyl) :

| | |
|---|---|
| Ohne Katalysator | 150°, 50 h, 35 % Umsetzung |
| $SnCl_2$ | 150°, 9 h, 90 % Umsetzung |
| $SnF_2$ | 140°, 3 h, 96 % Umsetzung. |

Analoges gilt für andere Reste wie z. B. R = n-Octyl.

Ein besonderer Vorteil der neuartigen Katalyse zeigt sich daran, daß der Teilschritt gemäß Gleichung 9, der mit den technisch besonders wichtigen aliphatischen Resten am Zinn ohne Katalysator überhaupt nicht zu verwirklichen ist, ermöglicht wird und in sehr brauchbarer Weise abläuft (R = n-Butyl) :

| | |
|---|---|
| Ohne Katalysator | 180°, 5 h, 0 % Umsetzung |
| $SnF_2$ | 180°, 5 h, 70 % Umsetzung. |

Das führt dazu, daß die bisher nicht ausführbare, für die Praxis jedoch sehr wünschenswerte Umsetzung 8 nunmehr gut ausgeführt werden kann (R = n-Butyl). Die ohne Katalysator erzielten 25 % entsprechen dem Teilschritt gemäß Reaktion 1, nach der hier aber bisher jede weitere Umsetzung und damit die Anwendbarkeit aufhörte :

| | |
|---|---|
| Ohne Katalysator | 150°, 20 h, 25 % Umsetzung |
| $SnCl_2$ | 150°, 21 h, 97 % Umsetzung |
| $SnF_2$ | 150°, 2 h, 70 % Umsetzung. |

Natürlich kann erfindungsgemäß in jedem der beispielhaft genannten Fälle vollständige Umsetzung bis zur Einstellung des thermodynamischen Gleichgewichts erzielt werden.

Wird das erfindungsgemäße Verfahren bei einer Temperatur unterhalb von 210 °C, dem Schmelzpunkt des $SnF_2$, betrieben, handelt es sich offenbar um eine heterogene Katalyse : Die Reaktionsgeschwindigkeit ist von der Oberfläche des festen Katalysators abhängig, bei gleichbleibender Oberfläche pro Gewichtseinheit also auch von der Menge des Katalysators. So wird die Umsetzung gemäß Gleichung 2, R = n-Butyl, bei 160 °C durch 5 Mol-% $SnF_2$ in 4 Std zu 47 %, mit 10 Mol-% in der gleichen Zeit zu 70 %, mit 20 Mol-% jedoch bereits zu 96 % Reinausbeute geführt. Abhängig vom Verteilungsgrad, d. h., dem Verhältnis Oberfläche zu Gewichtseinheit, kann derselbe Effekt sowohl mit größeren wie auch geringeren Katalysatormengen erzielt werden. Dasselbe gilt für einen Katalysator, der feinverteilt auf einem Trägermaterial niedergeschlagen ist. Je nach Art der weiter unten erläuterten Aufarbeitung kann es vorteilhaft sein, mit grobkörnigem Katalysator in größerer Menge oder mit sehr fein verteiltem in kleiner Menge zu arbeiten.

Technisches $SnF_2$ zeigte dieselbe Wirkung wie analysenreines. Eine besondere Trocknung vor dem Einsatz ist empfehlenswert zur Vermeidung von Hydrolyse von Organzinnhalogenid, aber nicht essentiell.

Die Abtrennung des zinnorganischen Produktes vom festen Katalysator kann sehr leicht geschehen. So kann das $SnF_2$ einfach abfiltriert oder -zentrifugiert werden bzw. das Produkt wird vom abgesetzten Katalysator abgehebert. Lösungsmittel sind für das Verfahren und für die Abtrennung nicht erforderlich, schaden jedoch auch nicht. Zweckmäßig hält man die Temperatur des Gemisches bei der Abtrennung des Katalysators oberhalb des Schmelzpunktes des Produktes, im Falle des technisch wichtigen Di-n-butylzinn-dichlorid also z. B. bei 50 °C. Man kann auch das Produkt vom Katalysator abdestillieren, gegebenenfalls im Vakuum.

Ein besonderer Vorteil der Verfahrensweise in nichthomogener Phase liegt darin, daß der Katalysator

ohne weitere Operation wiederverwendet werden kann. Besonders günstig kann es dabei sein, wenn der Katalysator gleich im Reaktionsgefäß verbleibt, z. B. nach Abhebern oder umgekehrter Abfiltration des flüssigen Produktes. Der Zahl der Wiederverwendungen ist dabei prinzipiell keine Grenze gesetzt.

So ist auch eine kontinuierliche Verfahrensweise möglich, bei der das Umsetzungsgemisch bei geeigneten Temperaturen über ein Katalysator-Festbett oder durch eine mit $SnF_2$ gefüllte Säule geleitet wird.

Die Verfahrensweise in homogener Phase bietet insbesondere den Vorteil, daß erheblich geringere Katalysatormengen einzusetzen sind.

Dabei ist in gleicher Weise, wie bei der Verfahrensweise in nichthomogener Phase, die Abtrennung des Katalysators nach Abkühlung unterhalb von 210 °C leicht zu bewerkstelligen ; im allgemeinen dürfte sich aber aufgrund der geringen Zusatzmengen bei der homogenen Verfahrensweise eine Abtrennung des Katalysators erübrigen.

Die Katalyse in homogener Phase ist durchführbar, wenn die Reaktionstemperatur oberhalb des Schmelzpunkts von $SnF_2$ bei etwa 210 °C gewählt wird und eine erhöhte thermische Beanspruchung des Reaktionsgemisches in Kauf genommen wird, die allerdings relativ kurzzeitig ist, da bei dieser Temperatur die Einstellung des Reaktionsgleichgewichts bereits nach etwa 1 h erreicht ist.

Das Wesen der Erfindung wird weiterhin erläutert durch die in nachfolgenden Beispielen beschriebenen präparativen Umsetzungen.

(Bu = n-Butyl, Me = Methyl, Ph = Phenyl, Oc = Octyl, cHx = Cyclohexyl)

## Beispiel 1 a), b), c)

14,0 g $Bu_4Sn$ werden erst mit 2,5 g feingepulvertem, trockenem $SnF_2$ versetzt und dann mit 10,5 g $SnCl_4$ (exotherme Reaktion). Man heizt unter Rühren bis 160 °C, hält dort 6 h und arbeitet auf durch Abdestillieren vom Katalysator, Sdp. 91-93 °C/0,1) Torr. Ausbeute 22,1 g n-$Bu_2SnCl_2$ = 90 %. Weitere Mengen Ausbeute bleiben, zwecks Vermeidung von Überhitzung, am Katalysator.

Dieser verbleibt im Kolben, und man gibt erneut die angegebenen Mengen $Bu_4Sn$ + $SnCl_4$ hinzu und verfährt wie oben. Ausbeute 23,6 g = 96 %. Dies wiederholt man noch zweimal mit gleichen Ausbeuten (bis 98 %) ohne Wirksamkeitsverlust des Katalysators.

Man kann auch vom Katalysator oberhalb des Schmelzpunktes des Produkts filtrieren, z. B. bei 50-60 °C.

Man arbeitet analog zu obigem Vorgehen, jedoch mit 7,2 g $Me_4Sn$ statt des $Bu_4Sn$, filtriert vom Katalysator bei 120 °C, und erhält $Me_2SnCl_2$, das sogleich erstarrt (Fp. 107 °C).

Man verfährt analog für die Herstellung von $Ph_2SnCl_2$, indem man 50,0 g $Ph_4Sn$ allmählich unter Rühren in 30,6 g $SnCl_4$ einträgt und die Mischung bis zur leicht rührbaren Konsistenz bringt, eventuell durch zusätzliches Erwärmen. Dann fügt man 6,0 g $SnF_2$ zu und heizt 5 h auf 140 °C, filtriert wie oben warm vom Katalysator und erhält 75 g $Ph_2SnCl_2$ = 93 %, Schmp. 41 °C.

## Beispiel 2

Analog findet man mit 3,48 g $Bu_4Sn$, 5,66 g $BuSnCl_3$ und 1,25 g $SnF_2$ nach 3 h bei 150 °C 8,8 g = 97 % $Bu_2SnCl_2$. Derselbe Effekt wird mit 2,5 g $SnF_2$ nach 1,5 h, mit 0,70 g nach 5 h erreicht.

## Beispiel 3 a), b), c)

Ebenso erhält man aus 6,96 g $Bu_4Sn$ mit 2,48 g $BuSnCl_3$ und 1,25 g $SnF_2$ nach 2 h bei 140 °C 9,15 g = 97 % $Bu_3SnCl$.

Verfährt man mit gleichen Mengen, jedoch iso$Bu_4Sn$ statt $Bu_4Sn$, und iso$BuSnCl_3$ statt $BuSnCl_3$, so erhält man nach 2,8 h ein vergleichbares Ergebnis.

Analog ergeben 10,5 iso-$Oc_4Sn$ (iso-Oc = 2 Ethyl-hexyl) und 3,4 g iso-$OcSnCl_3$ nach 3 h 14,2 g = 96 % iso$Oc_3SnCl$.

Statt des eingangs erwähnten $BuSnCl_3$ kann man auch die äquimolare Menge $BuSnBr_3$ einsetzen und erhält in gleicher Weise, aber nach 2,5 h, $Bu_3SnBr$.

## Beispiel 4 a), b)

Aus 6,94 g $Bu_4Sn$, 15,66 g $SnCl_4$ und 2,51 g $SnF_2$ erhält man nach 2 h bei 140 °C und anschließender Fraktionierung 15,8 g = 70 % $BuSnCl_3$.

Mit 1,25 g $SnF_2$, 8,32 g n-$Oc_2SnCl_2$ und 5,24 g $SnCl_4$ erhält man nach 1 h bei 100 °C 49,5 % an n-$OcSnCl_3$ neben 50 % n-$Oc_2SnCl_2$.

## Beispiel 5

In 17,35 g $Bu_4Sn$ rührt man 15,2 g $Bu_2SnCl_2$ und 3,14 g $SnF_2$ ein, heizt 3 h auf 140 °C und erhält 31,25 g = 96 % an $Bu_3SnCl$.

Mit 3,80 g $SnCl_2$ als Katalysator erhält man selbst bei 150 °C erst nach 9 h 90 % Ausbeute.

Beispiel 6 a), b)

11,4 g $BuSnCl_3$ werden mit 3,9 g feinpulv. $SnF_2$ unter Rühren auf 160 °C gebracht, worauf man 13,1 g $Bu_3SnCl$ zugibt und 6 h bei dieser Temperatur rührt. Man isoliert nach üblicher Aufarbeitung 23,3 g = 95 % an reinem $Bu_2SnCl_2$.

Ein gleiches Ergebnis erhält man bei analogem Vorgehen, jedoch ausgehend von äquimolaren Mengen $Bu_4Sn$ und $SnCl_4$ unter Zugabe von $SnF_2$.

Beispiel 7 a), b)

Man arbeitet mit 13,1 g $Bu_3SnCl$, 2,5 g $SnF_2$ und 11,4 g $BuSnCl_3$ 4 h bei 160 °C und isoliert 23,8 g = 97 % (nach Waschen des Katalysators mit n-Hexan und Abdampfen des Lösungsmittels) $Bu_2SnCl_2$. Der Katalysator wird noch dreimal erneut eingesetzt und bleibt auch dann ohne Aktivitätsverlust.

Wendet man Mengen, Temperaturen und Zeit an wie soeben, als Katalysator jedoch 5,7 g feingepulvertes $NaSn_2F_5$ statt $SnF_2$, so erhält man beim ersten Umsatz lediglich 61 % an $Bu_2SnCl_2$, jedoch daneben 12 % $Bu_3SnCl$, 9 % $BuSnCl_3$ und 18 % tiefer und höher siedende, nicht identifizierte Nebenprodukte. Weitere Umsätze bringen keine Verbesserung.

Beispiel 8 a), b)

16,93 g n-$OcSnCl_3$ mischt man mit 3,14 g trockenem, feingemahlenem $SnF_2$ und heizt unter Rühren auf 80 °C. Dann fügt man 24,67 g n-$Oc_3SnCl$ hinzu und heizt innerhalb von 1 h allmählich höher, so daß zuletzt kurzzeitig 205 °C erreicht wird. Nach Abfiltrieren vom Katalysator, Waschen desselben mit n-Hexan und Aufarbeiten aller Lösungsmittel-Fraktionen erhält man n-$Oc_2$-$SnCl_2$, 41,5 g = 99,8 % Ausbeute.

Bei gleichem Vorgehen, jedoch mit 3,8 g $SnCl_2$ als Katalysator, erhält man erst nach 3 h vergleichbare Ausbeuten, daneben noch je 1 % der beiden Edukte.

Beispiel 9 a), b), c)

6,52 g $Bu_3SnCl$ liefern analog mit 1,57 g $SnF_2$ und 2,62 g $SnCl_4$ nach 6 h bei 160 °C 8,7 g = 95 % $Bu_2SnCl_2$.

Mischt man analog 9,87 g n-$Oc_3SnCl$ mit 2,62 g $SnCl_4$ und 2,5 g $SnF_2$, heizt höher, so daß nach 1 h 205 °C erreicht wird und hält dort unter Rühren 0,5 h, so erhält man in quantitativer Ausbeute (nachgewiesen : 12,45 g = 99,8 %) n-$Oc_2SnCl_2$.

Zur analogen Darstellung von Dineophylzinn-dibromid schmilzt man 43,9 g $SnBr_4$ auf, trägt 119,6 g $Neophyl_3SnBr$ ein sowie 9,0 g $SnF_2$ und rührt 4 h bei 140 °C.

Beispiel 10

135,3 g $cHx_4Sn$ trägt man allmählich in die Mischung aus 26,1 g $SnCl_4$ und 31,4 g $SnF_2$ und erwärmt bei kräftigem Rühren zusätzlich, bis alles gut rührbar ist, hält dann 1,5 h bei 140-145 °C und filtriert bei dieser Temperatur vom Katalysator. Man erhält 139 g = 86 % an $cHx_3SnCl$, Fp. 129 °C, und weitere 17 g nach Auswaschen des Katalysators mit Cyclohexan, zusammen 156 g = 96,6 %. Das Auswaschen erübrigt sich, wenn der Katalysator erneut mit Edukt beschickt wird.

Beispiel 11

Man mischt 104,1 g $Bu_4Sn$ mit 26,1 g $SnCl_4$ (exotherme Reaktion) und leitet das heiße Gemisch über eine geheizte Quarzsäule mit 20 mm Innendurchmesser, die 10 cm hoch mit $SnF_2$ mittlerer Körnung beschickt ist. Durch Außenheizung hält man die Füllung auf 200 °C und regelt die Abtropfgeschwindigkeit über die untenliegende Fritte so, daß $Bu_3SnCl$ der gewünschten Reinheit austritt. Können kleine Beimengungen an $Bu_4Sn$ und $Bu_2SnCl_2$ in Kauf genommen werden, ist rascherer Durchsatz möglich. Das Verfahren ist durch Einspeisung über die Dosiervorrichtung und Mischkammer am Säulenkopf kontinuierlich zu gestalten.

Beispiele für Reaktionen in homogener Phase

Beispiel 12 a), b)

Ein Gemisch aus 80 g $Bu_3SnCl$, 66,6 g $BuSnCl_3$ und 0,075 g $SnF_2$ (0,1 Mol-%) wird unter Rühren auf 215 °C erhitzt.

Zusammensetzung des Reaktionsgemisches in Abhängigkeit von der Zeit :

| | $BuSnCl_3$ | $Bu_2SnCl_2$ | $Bu_3SnCl$ |
|---|---|---|---|
| 0,5 h | 2,6 Mol-% | 93,4 Mol-% | 4,0 Mol-% |
| 1 h | 1,6 Mol-% | 96,7 Mol-% | 2,3 Mol-% |
| 2 h | 0,7 Mol-% | 97,1 Mol-% | 2,2 Mol-% |

Ein in gleicher Weise durchgeführter Versuch, jedoch mit 0,01 Mol-% $SnF_2$, führt zu einem ähnlichen Ergebnis.

Beispiel 13 a), b)

106,3 g $Bu_4Sn$ (technisches Produkt mit einem Cl-Gehalt von 1,9 %) und 70 g $SnCl_4$ werden mit 0,09 g $SnF_2$ versetzt und unter Rühren auf 215 °C erhitzt. Nach 2 h besteht das Reaktionsgemisch aus 2,5 Mol-% $BuSnCl_3$, 97 Mol-% $Bn_2SnCl_2$ und 0,5 Mol-% $Bu_3SnCl$.

In gleicher Weise werden 104,6 g $Oc_4Sn$ (technisches Produkt mit einem Cl-Gehalt von 2,3 %) und 44 g $SnCl_4$ mit 0,06 g $SnF_2$ umgesetzt. Nach 2 h besteht das Reaktionsprodukt aus 7,4 % $OcSnCl_3$, 92,1 Mol-% $Oc_2SnCl_2$ und 0,5 Mol-% $Oc_3SnCl$.

## Patentansprüche

1. Verfahren zur Herstellung von Organozinn-halogeniden der allgemeinen Formel $R_3SnX$, $R_2SnX_2$ oder $RSnX_3$ durch Redistribution zweckmäßiger Gemische aus Organozinnverbindungen der Art $R_4Sn$, $R_3SnX$ oder $R_2SnX_2$ und Zinnhalogen-Verbindungen der Art $R_2SnX_2$, $RSnX_3$ oder $SnX_4$, wobei R ein Alkylrest mit 1-16 C-Atomen, ein Cycloalkylrest, ein Aryl- oder Aralkylrest, und X eines der Halogene Cl, Br, I ist, dadurch gekennzeichnet, daß man als Katalysator Zinn(II)-fluorid einsetzt.

2. Verfahren zur Herstellung von Organozinn-halogeniden gemäß Anspruch 1, dadurch gekennzeichnet, daß man die Umsetzung oberhalb von etwa 210 °C in homogener Phase durchführt.

3. Verfahren zur Herstellung von Organozinn-halogeniden gemäß Anspruch 2, dadurch gekennzeichnet, daß man den Katalysator in Mengen von etwa 0,01 bis 1 Mol.-%, bezogen auf die Anzahl der Mole der Edukte, einsetzt.

4. Verfahren zur Herstellung von Organozinn-halogeniden gemäß Anspruch 1, dadurch gekennzeichnet, daß man die Umsetzung bei Temperaturen von etwa 140 °C bis 200 °C in nichthomogener Phase durchführt.

5. Verfahren zur Herstellung von Organozinn-halogeniden gemäß Anspruch 4, dadurch gekennzeichnet, daß man den Katalysator in Mengen von etwa 5 bis 50 Mol-%, bezogen auf die Anzahl der Mole der Edukte, einsetzt.

6. Verfahren nach Anspruch 1, dadurch gekennzeichnet, daß das Reaktionsgemisch kontinuierlich über den Katalysator geleitet wird.

## Claims

1. Process for the preparation of organotin halides of the general formula $R_3SnX$, $R_2SnX_2$ or $RSnX_3$ by the redistribution of appropriate mixtures of organotin compounds of the type $R_4Sn$, $R_3SnX$ or $R_2SnX_2$ and halotin compounds of the type $R_2SnX_2$, $RSnX_3$ or $SnX_4$, where R is an alkyl radical having from 1 to 16 carbon atoms, a cycloalkyl radical, an aryl or aralkyl radical, and X is one of the halogens Cl, Br and I, characterised in that stannous fluoride is used as catalyst.

2. Process for the preparation of organotin halides according to claim 1, characterised in that the reaction is carried out at above about 210 °C in a homogeneous phase.

3. Process for the preparation of organotin halides according to claim 2, characterised in that the catalyst is used in amounts of about from 0.01 to 1 mole%, based on the number of moles of the starting materials.

4. Process for the preparation of organotin halides according to claim 1, characterised in that the reaction is carried out at temperatures of about from 140 °C to 200 °C in a non-homogeneous phase.

5. Process for the preparation of organotin halides according to claim 4, characterised in that the catalyst is used in amounts of about from 5 to 50 mole%, based on the number of moles of the starting materials.

6. Process according to claim 1, characterised in that the reaction mixture is passed continuously over the catalyst.

**Revendications**

1. Procédé pour préparer des halogénures d'organoétains de formules générales $R_3SnX$, $R_2SnX_2$ et $RSnX_3$ par redistribution de mélanges appropriés constitués de composés organostanniques du type $R_4Sn$, $R_3SnX$ ou $R_2SnX_2$ et de composés halogénés de l'étain du type $R_2SnX_2$, $RSnX_3$ ou $SnX_4$, le symbole R désignant un radical alkyle contenant de 1 à 16 atomes de carbone, un radical cycloalkyle, un radical aryle ou un radical aralkyle, et X représentant l'un des halogènes Cl, Br et I, procédé caractérisé en ce qu'on utilise, comme catalyseur, le fluorure d'étain(II).

2. Procédé de préparation d'halogénures d'organoétains selon la revendication 1, procédé caractérisé en ce qu'on effectue la réaction en phase homogène à une température supérieure à environ 210 °C.

3. Procédé de préparation d'halogénures d'organoétains selon la revendication 2, procédé caractérisé en ce qu'on utilise le catalyseur en une quantité comprise entre environ 0,01 et 1 % en moles, par rapport au nombre de moles des corps de départ.

4. Procédé de préparation d'halogénures d'organoétains selon la revendication 1, procédé caractérisé en ce qu'on effectue la réaction en phase non homogène à des températures d'environ 140 à 200 °C.

5. Procédé de préparation d'halogénures d'organoétains selon la revendication 4, procédé caractérisé en ce qu'on utilise le catalyseur en une quantité d'environ 5 à 50 % en moles, par rapport au nombre de moles des corps de départ.

6. Procédé selon la revendication 1 caractérisé en ce qu'on fait passer le mélange réactionnel, en continu, sur le catalyseur.